# EUROPEAN PATENT APPLICATION

(11) **EP 4 356 747 A1**
(43) Date of publication of application: **24.04.2024**
(21) Application number: 22203014.0
(22) Date of filing: 21.10.2022
(51) Int. Cl.: A23D 7/005, A23J 3/22, A23L 31/00

(54) **FAT REPLACEMENT PRODUCT**

(71) Applicant: JK Holding B.V., 5927 NW Venlo (NL); Vegout Fungi Ltd, Bradford, West Yorkshire BD1 5LL (GB)
(72) Inventor: BRENNAN, Gary Stephen, BRADFORD, BD1 5LL (GB); BOTHA, Michael Christoffel, BRADFORD, BD1 5LL (GB); KLERKEN, Johannes Gisbert Gerardus Maria, 5927 NW VENLO (NL)
(74) Representative: Hoyng Rokh Monegier B.V.

(57) **Abstract**

The present invention relates to a fat product, suitable for substituting animal fat, wherein the product comprises: an amount of one or more vegetable fibrous material; an amount of vegetable fat or oil; water; and one or more additional binding materials; wherein the fat product is a coherent gel at room temperature and substantially white. The one or more vegetable fibrous material is selected from edible fungi materials. The fat replacement product preferably is used as visible particles in a meat or meat substitute product such as a burger or sausage.

## Description

### FIELD

The present specification relates to a fat replacement product, particularly vegan fat replacement product. The disclosure also relates to a process of manufacturing a fat replacement product, for use in a meat substitute or for use in meat and/or coating on such products.

### BACKGROUND

The demand for meat substitutes has increased in response to an increasing awareness of the impact on global warming and other environmental issues caused by the meat industry, in addition to concerns about health, animal welfare, and food security. Also, for health reasons, meat products comprising fat particles like sausages, hamburgers and the like would be healthier if less fat would be present.

The meat-free food market includes a great number of meat analogues, manufactured to be meat-like in their texture, appearance, and flavour. Known as "substitute" or "imitation" meat products, it is possible to buy realistic meat-free "burgers", "hot dogs", "chicken nuggets" and "meatballs". Some products are designed to give the illusion of bleeding like a meat-burger would, using substitutes such as beetroot juice. These foods are marketed as a sustainable answer to a food culture dominated by meat products. Generally, the consumers prefer that meat substitute products look like real meat products, and therefore it is an aim to provide a fat replacement product that looks like animal fat with respect to colour and structure.

The browning of meat during cooking occurs due to a chemical process, known as the Maillard reaction, in which temperatures of around 140 °C to 165 °C cause amino acids in the meat to react with reducing sugars, resulting in the browning of the meat, which also gives the cooked meat a distinctive flavour. Caramelisation of meat occurs via a different process to the Maillard reaction, known as pyrolysis. Pyrolysis of sugars in the meat, in particular in the fatty areas of the meat product, cause the food to turn brown and provides a characteristic change in flavour. During this process fats may start to melt, changing in texture in addition to their colour and flavour. Some meat substitutes, such as meat-free bacon, include artificial colouring to give the product the appearance of the charred fat found on cooked bacon meat.

The addition of a vegan fat to a meat-free product not only helps bind the ingredients together, but it can help improve the flavour, texture and/or appearance (marbling) of the product. The addition of a low-fat fat replacement product helps in providing a healthier product. Normal animal fat contains more than 50 wt% of fatty-acid triglycerides, while the aim of the present invention is to provide a fat replacement product having less than 40 wt% of fat or oil, or even less than 25 wt% while keeping good taste and/or texture and/or appearance.

Fat replacement products with less fat are known, and for example descried in US-A-5695806, US-A-6113976, WO94/14334 and US2021/244041. Generally, these fat replacement products are an oil in water emulsion with a thickener like maltodextrine, (pregelatinized) starch, amylopectin, gelatine, methoxyl pectin or the like.

Vegan fat replacement may be done with straight hardened palm oil, coconut fat or the like. These products generally consists of substantially of fatty acid triglycerides only, and are therefore up to 100% fat.

There is a need for an improved fat replacement product that mimics the appearance, texture and/or flavour of animal-based fats having lower fat content, so that meat and meat analogues can better imitate the desirable characteristics associated with the actual consumption of meat with lower fat content.

### SUMMARY OF THE INVENTION

According to a first aspect of the invention there is provided a fat product, suitable for substituting animal fat, wherein the product comprises:
a) an amount of one or more vegetable fibrous materials;
b) an amount of vegan oil;
c) water;
d) one or more additional binding materials;
wherein the fat product is a coherent gel at room temperature and substantially white.

The fat product of the invention provides meat or meat-like products with a good taste, including improved succulence / juiciness over other replacement products like coconut fat, or fat replacement products described in the prior art.

WO2021/189111 describes a meat replacement product based on mushroom material, oil, water and further binder materials. As the product is aimed at replacing meat, it is a product with meat-like colour.

The product according to the invention preferably comprises one or more edible fungi materials as vegetable fibrous material. However, whitish vegetable material like fibrous material from (white) cauliflower, parsnip or celery tuber or white beans can be used as well.

Preferably, the edible fungi material is selected from the genus Pleurotus or Agaricus, more preferably from fungi of the species Pleurotus Ostreatus. Preferably, the fungi material is a blanched fungi material, preferably blanched for at least about 5 minutes in water at a temperature of between 80 °C to 100 °C.

Generally, the product comprises a mixture of 20-70% of vegetable fibrous material, 5% to 35% of oil, 20% to 60% of added water, and 0-20 wt% of additional binding materials. The additional binder preferably comprises a polysaccharide binder, substituted polysaccharide or protein binder.

The oil generally is a vegan oil, preferably sunflower oil, canola oil or coconut oil.

The product of the present invention generally is substantially white, as it mimics fat particles or fat stripes in meat, burgers or the like. Yet, off-white like slightly yellowish can be acceptable as well. The colour preferably is clearly lighter (whiter) than a meat like colour.

The product of the present disclosure is a coherent gel, which means that - when the product is set as for its intended format - it does not flow without applying pressure. Hence, a 1 cubic cm particle at 20 °C remains in its shape when left standing on a table for 1 hour.

The product of the invention may be homogeneously dispersed in a meat product. However, it is preferred that the product of the invention is in particulate form of a size of larger than 1 mm. This allows a marbling effect and improves the visible texture.

Preferably, the fat replacement particles are frozen and packaged. Such fat replacement product can suitably be used in a meat product comprising meat or a vegan meat replacement product with 1-50 wt% of fat product according to the present invention, preferably 4-40 wt%. Yet, the product can be provided at room temperature or chilled, like at about 4 °C.

The invention in a further aspect relates to the use of a fat product according the invention in a food product, wherein the fat product is used in an amount between 1-50 wt% and is separately visible, for example as separate particles in the food product, as fat coating or as fat stripes. Preferably, the food product is a vegetarian or vegan meat substitute.

In a further aspect, the invention relates to a method providing the fat replacement product in white particulate form.

The fat product, particularly as a vegan fat product, improves the appearance of the food products to which it is added, so that the food product looks more desirable, for instance like the meat product it is imitating. During cooking, the fat product caramelises giving the appearance and texture of cooked fat, particularly animal fat. Furthermore, the product allows lower fat to be present in meat or meat-like products. Additionally, the product provides improved succulence / juiciness to the meat replacement product.

### BRIEF DESCRIPTION OF THE DRAWINGS

Figure 1 is a photo of burger prior to frying;
Figure 2 is a photo of these burgers after frying;
Figure 3 is a detailed photograph from two of the products after frying.

### DETAILED DESCRIPTION OF THE INVENTION

### vegetable fibrous material

The vegetable fibrous material generally is from white or whitish vegetables, or from (slightly) coloured vegetables, including fungi material.

Suitable vegetables include (white) cauliflower, parsnip, celery tuber, white beans, salsify or chicory. Other, preferably white, vegetables can be used as well, such as white asparagus (like the peelings from preparing white asparagus), radish and the like.

Preferably, the vegetable fibrous material is fungi material, preferably from one or more edible mushroom materials as these products provides highest succulence and juiciness. The one or more fungi materials may be from one or more edible mushroom materials and one or more other non-mushroom fungi materials. The fat replacement products based on mushrooms appears to give the best performance with respect to organoleptic properties.

The one or more edible fungi materials used in the process of the present disclosure can be from any edible mushroom, preferably the fruit body or sporocarp of the fungi. In a further embodiment of the invention, the fungi material comprises mycelium, and preferably substantially consists of mycelium. An edible mushroom material is for instance defined as the fleshy, edible fruit bodies of fungi, where either part or all of the mushroom may be safely consumed by a human when fresh, and/or where either part or all of the mushroom may be safely consumed by a human only after a processing or cooking step, wherein the processing or cooking may remove or inactivate any harmful components of the mushroom or part thereof. By safely consumed is meant that the consumption does not result in ill-health or death of the consumer. The one or more fungi materials, for instance one or more edible mushroom materials may be cultivated and/or harvested from the wild. Mycelium may be provided from fermentation the fungi on an edible substrate such as for example grain, drying and grinding the fermented substrate with the grown mycelium.

The one or more fungi material may be material from any mushroom, including but not limited to mushrooms of the genera *agaricus, lentinula, pleurotus, hericium, laetiporus, armillaria, pioppini, flammulina, hypsizygus, lyophyllum, cantharellus, craterellus, clitocybe, boletus, grifola, gyromitra, hydnum, cortinarius, lactarius, tricholoma, volvariella, ganoderma, auricularia, sparassis, morchella, tuber, amanita, clavariaceae, calvatia, coprinus, fistulina, leccinum, lepiota, suillus, coprinopsis, russula* and/or *polyporus*, or combination thereof.

More specifically, the mushroom material may be material from a mushroom of the species *Agaricus bernardii, Agaricus crocodilinus, Agaricus fuscofibrillosus, Agaricus haemorrhoidarius, Agaricus rodmanii, Agaricus bitorquis, Agaricus bisporus, Boletus aereus, Boletus appendiculatus, Boletus badius, Boletus barrowsii, Boletus bicolor, Boletus mirabilis, Boletus pinicola, Boletus regius, Boletus zelleri, Cantharellus lateritius, Clitocybe fragrans, Clitocybe odora, Clitopilus prunulus, Cortinarius armillatus, Entoloma abortivum, Falmmulina ve!utfpes, Gomphus clavatus, Grifola frondosa, Polypilus frondosa, Gyromitra gigas, Hericium americanum, Hericium ramosum, Hericium erinaceus. Hericium corrafoides, Hyspsizygus tessulatus, Lyophyllum decastes, Lyophyllum shimeji, Hygrophorus russula, Leccinum aurantiacum, Leccinum insigne, Leccinum scabrum, Lentinula edodes, Lentinula lateritia, Marasmius scorodonius, Pholiota aurivella, Phlogiotis helvelloides, Pluteus cervinus, Pleurotus ostreatus, P!eurotus eryngii, Polyozellus multiplex, Polyporus umbellatus, Ramaria botrytis, Rozites caperata, Russula aeruginea, Russula cyanoxantha, Russula delica, Russula nigricans, Russula vesca, Russula xerampelina, Sparassis crispa, Russula radicata, Strobilomyces floccopus, Strobilomyces confuses, Stropharia rugosoannulata, Suillis brevipes* and/or *Suillis pictus.*

Most preferred are mushrooms of the genera *Pleurotus*, and *Agaricus.* More specifically, the one or more fungi materials may be material from any mushroom, of the species *Pleurotus ostreatus*, *Pleurotus eryngii.*

In some embodiments of the disclosure, the one or more fungi materials may comprise one type of mushroom. In other embodiments, the one or more fungi materials may comprise at least two different types of mushroom, wherein the type refers to a genera, species or sub species. It would be understood that some fungi or fungi materials would have preferred characters, such as water content, flavour profiles and/or textures that would be more suited to certain meat substitutes.

The one or more fungi materials may contain one or more or all of the edible parts of the fungi materials, including but not limited to the cap, the stalk, the stem, the cup, the ring and/or the gills, or combinations thereof. In some embodiments of the disclosure, a fungi material may comprise only one part of the fungi. In other embodiments, the one or more fungi materials may comprise at least two parts of the fungi. For example, a fungi material may comprise the mushroom stem only, or may comprise any combination of the mushroom stem and mushroom cap. In another example, the one or more fungi materials may comprise the complete fruitbody (otherwise known as the sporocarp) of the fungi. Alternatively, the one or more fungi materials may comprise the majority of the sporocarp, but with parts of the stem trimmed away, or parts of the gills trimmed away or parts of the caps (such as the scales) trimmed away. The one or more fungi material may comprise mycelium of the fungi. In a further embodiment, the fungi material substantially consists of mycelium from the fungi.

The vegetable fibrous material generally has been blanching or cooked before applying it in the product of the present disclosure. The blanching or cooking step may involve treating the vegetable (including fungi) in water, for instance in water at a temperature of between 80⁰C to 100⁰C. For example fungi may be blanched for at least 5 minutes. The blanching or cooking step may clean the vegetables, for instance by removing contaminants, such as bacteria or growth substrate. The blanching step may deactivate one or more of the enzymes within the vegetable material. When using mycelium, a blanching step may not be necessary for the fungi material.

The vegetable fibrous material may have been de-flavouring and/or de-coloured. The de-flavouring and/or de-colouring step may be provided after a blanching or cooking step. For example fungi materials can be de-flavoured using a de-flavourer like a vinegar, such as a rice vinegar, for instance a fermented rice vinegar. The de-flavourer may have a pH of 5.0 +/- 0.2.

The vegetable fibrous material generally is minced to a puree after the blanching or cooking step, which may include a chopping step. The chopping step generally is provided before the blending the amount of vegetable fibrous material and an amount of oil emulsion together. The chopping step many include use of one or more of a vertical cutter mixer, a bowl chopper, or a slicer.

In an alternative embodiment of the present invention, the vegetable fibrous material, preferably at least the fungi material, can be provided as powder. The powder can be rehydrated when used to prepare the fat replacement product. The powdery product may comprise several of the dry components, such as the vegetable materials, further binding materials and the like. Such powdery product only needs water and oil to provide the fat replacement product of the present invention. Further components may be added, like savory ingredients, when preparing the fat replacement product as well.

The total amount of vegetable fibrous material in the fat replacement product generally is between 20 wt% to 70 wt%. Preferably, the amount of vegetable fibrous material in the fat replacement product, is between 40 wt% to 60 wt%. More preferably, the amount of vegetable fibrous material in the fat replacement product is 45-55 wt%.

### Vegetable fat or oil

The oil of the fat replacement product generally comprises one or more vegan oils. The one or more oils may be any oil selected from the group comprising: vegetable oil, oil from seaweed, from microorganisms and the like.

Suitable oils include rapeseed oil, coconut oil, corn oil, cottonseed oil, olive oil, sesame oil, soybean oil, peanut oil, castor seed oil, almond oil, apricot kernel oil, lemon grass oil, sunflower seed oil, wheat germ oil, macadamia oil, meadowfoam seed oil, hemp seed oil, grape seed oil, marula oil, rice bran oil, avocado oil, citrus oil and carrot seed oil. The oil may comprise two or more types of oil. Preferred oils used in meat-free products include canola oil, coconut oil, palm oil and shea oil. The main fat type in coconut oil and palm oil is saturated fat. It may be preferred to use an oil comprising mostly unsaturated fatty acids, like sunflower oil, canola oil or the like. Such oil generally has a melting point below 5 °C, and more preferably below -5 °C, as unsaturated fatty acids are more healthy than saturated fatty acids.

The total amount of oil, such as vegan oil, in the fat replacement product generally is between 5 wt% to 35 wt%. Preferably, the amount of vegan oil in the fat replacement product, is between 10% (w/w) to 25%. More preferably, the amount of vegan oil in the fat replacement product is 13-20 wt%.).

### water

The amount of added water in the fat replacement product is between 20 wt% to 60 wt%. Preferably, the total amount of water in the fat replacement product is between 25 wt% to 50 wt%. More preferably, the total amount of water in fat replacement product is 27 wt% to 35 wt%.
*one or more additional binding materials;*

The fat replacement product may comprise one or more binders, preferably vegan binders. Suitable binders preferably include one or more polysaccharides or substituted polysaccharides such as starch, pregelatinized starch, methylcellulose, amylopectin, carrageenan and the like. Further, citrus fibres, certain proteins like potato patatin protein, pea protein isolate, chicken protein, and other known binders like gelatine can be used. Gelatine or chicken protein would be from a non-vegan source and is preferably not used. Preferably, one or more (substituted) polysaccharides is used.

In a preferred embodiment, the binder includes a methylcellulose binder, and more preferably the binder includes a blend of methylcellulose and carrageenan. The methylcellulose may have the E number: E461. The carrageenan may have the E number: E407.

The total amount of binder in the fat replacement product is between 0% to 20 wt%. Preferably, the total amount of binder in the fat replacement product is 1 to 15 wt%.

### Further additives

The product according the invention may further comprise additional liquid and/or flavours and/or seasonings and/or preservatives, and/or other fats. These may be added to the product to enhance the texture, flavour and colour of the fat product.

Flavourings and seasonings may include known fat flavouring, smoky flavourings and/or vegan or vegetarian flavourings that are meat-specific, such as bacon, beef, or chicken flavouring.

### Preparation

Preferably, the fat replacement product is prepared from a mixture of the vegetable fibrous material, and an emulsion of about two third water and about one third oil, mixed with binder and the remainder of further additives.

The emulsions preparation step generally includes agitation. The agitation may be achieved by manual and/or by mechanical means, and may include rotary or static mixers, high-speed mixers, high-shear mixers, and homogenisers.

The blending the amount of fibrous vegetable materials and the amount of the emulsion together may include adding the amount of fibrous vegetable materials to the amount of emulsion or adding the amount of emulsion to the amount of vegetable fibrous materials or adding both at the same time. The blending step generally will provide a viscous fat product that will gel.

The fat product preferably is a vegan fat product. The fat product can be used in a food product immediately, for instance by addition to a further processing step involved in the production of the food product. The food product may be a vegan food product or a vegetarian food product.

It is preferred to provide the fat replacement product as a solid particulate product. The fat product therefore preferably is frozen. The frozen product may be provided as is, in a block that generally will be ground by a user. In a further preferred embodiment, the fat replacement product is minced or ground (for example in a meat grinder) to course particles of 1 mm or larger, preferably of particles between 1-20 mm, more preferably between 2-10 mm, which can be used to mix with hamburgers, sausages and the like. Although a frozen product is easiest to handle in particulate form, it is also possible to provide and/or use the product chilled and/or at room temperature, in particular of the gel strength is relatively high.

The fat product may first be retorted, for instance by heating in an unopened, hermetically sealed container for a time, and to a temperature beyond 100 °C, preferably about 115 °C or higher, for a time sufficient to render the contents commercially sterile. However, when the fat replacement product is deep-frozen, a sterilisation step is not necessary.

### application

The fat product generally will be added to one or more food products, such as meat substitutes, for example a meat-free burger, steak or bacon substitute. The fat product may be added in order to mimic the visual, textural, and/or flavour characteristics of non-vegan and/or non-vegetarian fats. In particular, the fat product may mimic one or more of the visual, textural, and/or flavour characteristics of non-vegan and/or non-vegetarian fats found in food products, such as cooked meat products.

Although vegan food is preferred for environmental reasons, meat products like burgers, sausages and the like for true meat are still the largest market. In this application, lower fat products are an important aim. The present fat replacement product is very suitable for this application. Generally, fat comprises 50 wt% or more of (saturated) triglyceride fat component, up to nearly 100%. The present fat replacement product allows to reduce this fat content to about 15% without lowering the organoleptic properties of the meat product. As in burgers or sausages the visible fat compound may be 10-20%, the fat content in the end product is lowered by 5-15 wt% absolute value.

In an alternative embodiment, the fat replacement product can be extruded onto the side of a meat replacement product mimicking a lard side of a steak, or lard stripes in a solid piece of meat. The fat replacement product can also be used to coat a meat(-like) product as e.g. batter coat.

A meat substitute may be a substance that can act as a substitute for any type of meat in a food product. The meat may be the flesh or organ of any animal such as, but not limited to, beef, lamb, mutton, poultry, game animals, and the like. The meat substitute may be a substitute for any cut of meat, and/or may be a substitute for meat in any prepared form, such as, but not limited to, minced meat, shredded meat, cubed, diced or sliced meat, meat patties, sausages, processed meat products, or large bone-free cuts of meat such as steaks, roasts, breast, loins etc. Meat substitutes can be vegetarian (free of animal flesh products, including animal or animal derived cells). The meat substitute may be vegan (substantially free of any animal derived products).

The meat substitute may be in a form suitable for immediate consumption or may require cooking, heating or further processing as desired.

### Example, growing of mushrooms

An important feed to the process is the vegetable fibrous material, such as fungi material, which in this embodiment are mushrooms of the genera *Pleurotus,* more specifically, of the species *Pleurotus ostreatus.* As an example, the following process is described. The mushrooms are grown in a growing step according to conventional cultivation methods for that species. The species *Pleurotus ostreatus* is a commercially available strain, with spawn available from a number of sources. It is also known as the oyster mushroom or hiratake mushroom. Once grown, to a conventional extent and age, the mushrooms are subject to a cropping step applied in a conventional manner to collect them. The fruit body or sporocarp is used as the feed for the subsequent process steps. The cropped feed is then fed to a blanching step involving feeding boiling or near boiling water to the mushroom material. Water at a temperature of between 80 ⁰C to 100 ⁰C can be used. The mushroom material is generally held in the blanching step for at least 5 minutes. The blanching step cleans the mushroom material by removing contaminants, such as bacteria or growth substrate. The blanching step also deactivates the enzymes within the mushroom tissue. After the blanching step, the mushroom material is subjected to a de-flavouring step by contacting the material with a de-flavourer, which in this embodiment is fermented rice vinegar. An example rice vinegar is a Japanese Koji rice vinegar which is not as acidic as some other vinegars. Such a rice vinegar as available from Hanamaruki Foods Inc. 2-15-4, Nihonbashikayabacho, Chuo-ku, Tokyo 103-8205, Japan.

The de-flavoured mushroom material is then passed to a cooling step. The cooled mushroom material is then fed to a chopping step. A very fine chop is applied such that the material has the consistency of puree. The chopped mushroom material is then fed to a blending step. In the blending step a flavouring is added.

Separately, an emulsion is prepared by mixing water, oil and a binder in a high-speed blender to give the desired emulsion. The agitation used to create the emulsion can be achieved by mechanical means, such as rotary or static mixers, high-speed mixers, high-shear mixers, and homogenisers. The materials can be added in any order and the step continues until the materials are mixed into a smooth, consistent emulsion. The binder in this embodiment is a mixture of methylcellulose and carrageenan.

In a further blending step, the emulsion and the mushroom material are mixed together and blended to form a viscous liquid that forms the vegan fat product. The agitation used to create the vegan fat product blend is achieved by manual or mechanical means, such as rotary or static mixers, high-speed mixers, high-shear mixers, and homogenisers. The viscous liquid is substantially gelled such that particles at room temperature remain their shape.

The total amount of mushroom material in the viscous liquid is 50 wt% in this example. The total amount of emulsion in the viscous liquid is 50 wt% in this example. The viscous liquid can be used as a vegan fat product in a variety of manners.

The viscous liquid is packaged in sacks of 0.5 or 1 L, and frozen for later use. Alternatively, the product is frozen and passed through a meat grinder, producing particles of for example 4-10 mm, while keeping this frozen. The particles can be used as such in preparing burgers with fat particles.

### EXAMPLES

### Examples 1-2 and comparative experiment A.

The recipe for the fat replacement composition (in this example, mushroom fat) comprises two parts (the emulsion and the vegetable puree), which are blended together after separate preparation. The emulsion was made once, which was enough to make both mushroom fats.

### Preparation oyster mushroom or white button-based fat

*1) Oyster mushroom puree*
   a. Bring water to a boil.
   b. Add 1000g oyster mushroom (whole) to the water and bring back to boil (cook for 5 minutes until done).
   c. Cool the oyster mushrooms under cold running water and place them in a sieve.
   d. Weight 485g of cold oyster mushrooms and add 15g Shio koji and blend till homogenous.
   e. Place the puree in a fridge.
*2) Emulsion*
   a. Mix 56g methylcellulose, 64g beef flavour and 480g oil.
   b. Add 1000g cold water (4°C) and blend until homogenous.
   c. Put the emulsion in a fridge.

### 3) Oyster mushroom fat

a. Blend 500g oyster mushroom puree with 500g emulsion until homogenous. For the preparation white button fat, instead of Oyster mushroom, white button mushroom was used

Both fat products, and coconut fat as comparison were frozen, ground in meat grinder (8mm) and stored at -18°C for further use.

### Preparation burger application

An easy instant mix (Zero meat burger from Pietercil) was used to make vegetarian burgers. The Table shows the ingredients used for this mix. The zero meat mix was blended with the flour after which the water was added and mixed until homogenous. The oil was added to the blend and also mixed until homogenous resulting in the burger base. The base was left to rest for 30 minutes. For the burgers 625g of this burger base was used and mixed (very shortly) with 50g of the frozen fats (7,4%). The burgers were frozen after preparation and thawed right before organoleptic trials. For the organoleptic trials the burgers were pan-fried in a little amount of sunflower oil.

### Zero meat burger ingredients for the base

| Ingredient | Amount |
|---|---|
| | |
| Water | 1250 |
| Zero meat burger mix | 800 |
| Wheat flour | 200 |
| Sunflower oil | 250 |

### Results

No significant differences were noticed in the preparation of the two mushroom fats. The frozen ground fats were all of largely the same in order of whiteness. The coconut fat was the most white in terms of colour. The coconut fat particles were clearly visible in the burger application, while the mushroom fats were less visible. The mushroom fats thawed quickly and this caused smearing due to the pressure put on the fat replacement product. In case more clearly visible particles are aimed for, a stronger gelling (binder) material may be chosen.

During frying, the coconut oil leaked out of the burger while all mushroom fats were locked into the burger. Therefore, the burgers made with mushroom fats were more succulent than the burger with coconut oil. The burger made with coconut oil showed "holes" where the oil had been before frying

All mushroom fat burgers had a better mouthfeel in terms of moisture (juiciness) than the coconut-fat burgers. The coconut fat burger was the most dry of all of the burgers. The oyster mushroom fat burger seemed the most succulent, but the difference with the other mushroom fat burgers was small.

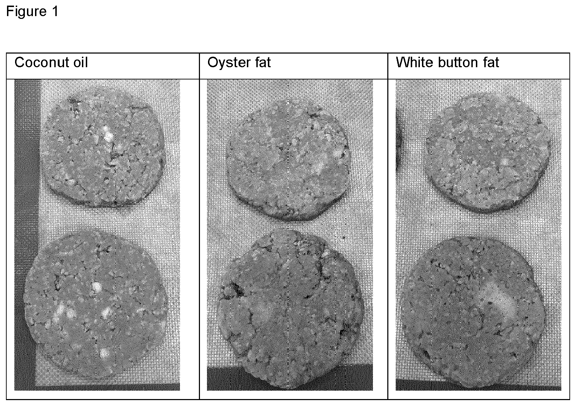

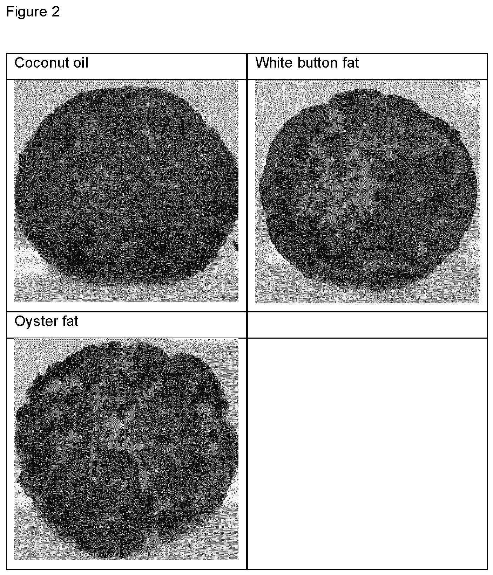

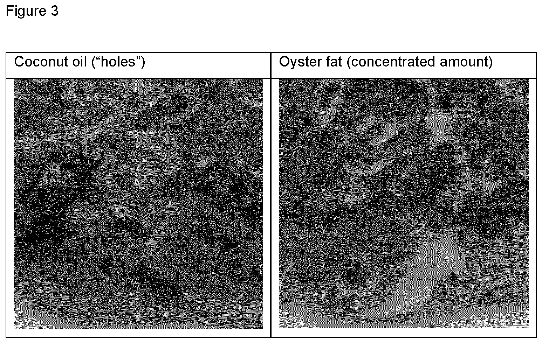

Figure 1 shows an example of the burger prior to any cooking steps. Figure 2 shows an example of the burger after it has been baked for 10 min. Figure 3 shows in detail that the coconut fat alternative left holes, but that the mushroom alternative showed fat-like presence in the cooked burger.

As is clear from the photographs, the non-baked product had nicely visible fat particles as in meat-based burgers. The fat product of the present invention was caramelised during cooking, giving the fat product the appearance of a non-vegan or non-vegetarian fat product. However, the coconut fat had melted and disappeared from the burger.

### Example 3

The fat replacement product with oyster mushrooms was compared with the fat replacement product made from parsnips, white beans, cauliflower and celeriac. Coconut fat was used as comparison.

### Method

The recipe for the vegetable fat comprises out of two parts (the emulsion and the vegetable puree), which were blended together after separate preparation.

### General preparation vegetable fat

### 1) Vegetable puree

a. Bring water to a boil.
b. Add 1000g vegetable to the water and bring back to boil (cook until done).
c. Cool the vegetables under cold running water and place them in a sieve.
d. Weight 485g of vegetable and add 15g Shio koji and blend till homogenous.
e. Place the puree in a fridge.

### 2) Emulsion

a. Mix 112g methylcellulose and carrageenan, 128g beef flavour and 960g oil.
b. Add 2000g cold water (4°C) and blend until homogenous.
c. Put the emulsion in a fridge.

### 3) Vegetable fat

a. Blend 500g vegetable puree with 500g emulsion until homogenous.

The preparation burger application was the same as in the former examples

### Results

No significant differences were noticed in the preparation of the vegetable fats. The cauliflower fat was the most white in terms of colour. All vegetable fat particles were clearly visible in the burger application.

All vegetable fat burgers had a good mouthfeel in terms of moisture. Between the vegetable burgers there was little difference in terms of succulence/juiciness. The cauliflower mushroom fat burger seemed the most succulent, but the difference with the other vegetable fat burgers was minimal. The coconut fat burger scored the worst.

### Examples 4-9 and comparative experiments B-H

Burgers were made according to the recipes as described above. The chicken, pork and beef meat all were made with 10% and 20% of pork fat as well as 10% and 20% oyster mushroom fat. The lean meat was grinded together with the pork fat and mixed shortly in a mixer, for the burgers made with pork fat. The oyster mushroom fat was made separately and mixed in more homogenously, since the oyster mushroom fat was more liquid. Four burgers of approximately 100g were made of each test and frozen for further use. Besides salt and pepper no additives were used to make the burgers, meaning that no additional binders were added.

For preparation and evaluation of the burgers were thawed at room temperature and pan-fried in a little oil until done. The burgers were evaluated upon succulence/juiciness. Furthermore, the weight loss during frying was determined.

### Meat burgers composition (g)

| Ingredients | Ex. 4 | Ex. 5 | Comp Exp C | Comp Exp D | Ex. 6 | Ex 7 | Comp Exp E | Comp Exp F | Ex 8 | Ex 9 | Comp Exp G | Comp Exp H |
|---|---|---|---|---|---|---|---|---|---|---|---|---|
| | | | | | | | | | | | | |
| Oyster Fat | 50 | 120 | | | 50 | 120 | | | 50 | 120 | | |
| Pork Fat | | | 50 | 120 | | | 50 | 120 | | | 50 | 120 |
| Pork meat lean | | | | | | | | | 450 | 480 | 450 | 480 |
| Beef meat lean | | | | | 450 | 480 | 450 | 480 | | | | |
| Chicken meat lean | 450 | 480 | 450 | 480 | | | | | | | | |

### Results

The burgers made with pork fat lost a significant amount of fat and juice during frying. This could easily be seen during frying.

| Burger | Weight before frying | Weight after frying | Weight loss |
|---|---|---|---|
| | (g) | (g) | (%) |
| Chicken + 10% Oyster Fat | 98,6 | 86,7 | 12,1 |
| Chicken + 20% Oyster Fat | 100,0 | 91,1 | 8,9 |
| Chicken + 10% Pork Fat | 104,0 | 86,0 | 17,3 |
| Chicken + 20% Pork Fat | 104,3 | 80,6 | 22,7 |
| Pork + 10% Oyster Fat | 100,1 | 84,5 | 15,6 |
| Pork + 20% Oyster Fat | 94,9 | 78,2 | 17,6 |
| Pork + 10% Pork Fat | 100,8 | 80,0 | 20,6 |
| Pork + 20% Pork Fat | 105,1 | 76,0 | 27,7 |
| Beef + 10% Oyster Fat | 99,1 | 83,6 | 15,6 |
| Beef + 20% Oyster Fat | 102,0 | 86,4 | 15,3 |
| Beef + 10% Pork Fat | 109,6 | 92,7 | 15,4 |
| Beef + 20% Pork Fat | 107,6 | 83,5 | 22,4 |

Furthermore, organoleptic trials showed that the succulence of the oyster mushroom fat burgers was much better than the pork fat version especially the 20% versions. The 10% versions showed less pronounced improvement of the succulence.

### Examples 10-17

For this trial four different types of methylcellulose (Methocel A15, K99, F50 and MX) were used as well as 4 different types of protein (chicken high whip, chicken high gel, rice and pea). Therefore 8 different emulsions were made and mixed with white button mushroom puree to prepare the fats.

### General preparation mushroom fat

### 1) White button mushroom puree

a. Weight 500g of drained pre-cooked and sterilized mushrooms and blend till homogenous.
b. Place the puree in a fridge.

### 2) Emulsion

a. Mix 28g methylcellulose or protein, 32g beef flavour and 240g oil.
b. Add 500g cold water (4°C) and blend until homogenous.
c. Put the emulsion in a fridge.

### 3) Mushroom fat

a. Blend 500g mushroom puree with 500g emulsion until homogenous.

The next Table shows the used recipes of the emulsions. The methocels were used in 3.5% and the proteins in 6%, since the protein generate weaker gels and lower viscosity.

**Table 2 Emulsion recipes.**

| | Ex-10 | Ex-11 | Ex-12 | Ex-13 | Ex-14 | ex-15 | Ex-16 | Ex-17 |
|---|---|---|---|---|---|---|---|---|
| | (g) | (g) | (g) | (g) | (g) | (g) | (g) | (g) |
| Methocel A15 | 28 | 0 | 0 | 0 | 0 | 0 | 0 | 0 |
| Methocel K99 | 0 | 28 | 0 | 0 | 0 | 0 | 0 | 0 |
| Methocel F50 | 0 | 0 | 28 | 0 | 0 | 0 | 0 | 0 |
| Methocel MX | 0 | 0 | 0 | 28 | 0 | 0 | 0 | 0 |
| Rice protein | 0 | 0 | 0 | 0 | 48 | 0 | 0 | 0 |
| Chicken Protein High Whip | 0 | 0 | 0 | 0 | 0 | 48 | 0 | 0 |
| Chicken Protein High Gel | 0 | 0 | 0 | 0 | 0 | 0 | 48 | 0 |
| Pea Protein | 0 | 0 | 0 | 0 | 0 | 0 | 0 | 48 |
| Beef flavour | 32 | 32 | 32 | 32 | 32 | 32 | 32 | 32 |
| Sunflower oil | 240 | 240 | 240 | 240 | 240 | 240 | 240 | 240 |
| Water | 500 | 500 | 500 | 500 | 480 | 480 | 480 | 480 |
| Total | 800 | 800 | 800 | 800 | 800 | 800 | 800 | 800 |

The burgers were prepared as described above, with the difference that in this case the fat replacement product was homogeneously mixed with the burger composition.

### Results

The emulsions showed significant differences in terms of viscosity. The methocel MX was the most viscous emulsion, while the rice and pea proteins were very liquid. However, the fats could all be made and processed to make the vegetable burgers.

The fat particles were not visible in the burger application, because the fats were mixed homogenously. The methocel MX and F50 were the most succulent burgers but all were relatively dry, which is probably due to the homogenous mixing process. The chicken proteins were comparable with the low viscous methocels, while the pea and rice protein were somewhat dryer. The cooked fats with different types of methocel showed differences. The less viscous A15, F50 and K99 showed little to no syneresis, while the much more viscous MX and original mix showed a lot of syneresis.

Yet, all products were acceptable in taste and organoleptic properties.

### Examples 18-20 and comparative experiment J

The used recipes of the emulsions are shown in the below table. The methocels were used in 3.5% and the protein in 6%.

*Emulsion recipes.*

| | Ex-18 | Ex-19 | Ex-20 |
|---|---|---|---|
| | (g) | (g) | (g) |
| Methocel K99 | 28 | 0 | 0 |
| Methocel MX | 0 | 28 | 0 |
| Chicken Protein High Gel | 0 | 0 | 48 |
| Beef flavour | 32 | 32 | 32 |
| Sunflower oil | 240 | 240 | 240 |
| Water | 500 | 500 | 480 |
| Total | 800 | 800 | 800 |

### Preparation of the burgers:

An easy instant mix (Zero meat burger from Pietercil) was used to make the vegetarian burger. The zero meat mix was blended with the flour after which the water was added and mixed until homogenous (see for composition the description above). The base was left to rest for 30 minutes. Two types of burger preparations were used.
1) 225g of this burger base was used and mixed homogenously with 25g of the fats (10%).
2) 225g of this burger base was used and mixed very shortly with 25g of frozen fat particles (10%).

As a reference a burger (comparative experiment J) was made with 10% sunflower oil, which could only be mixed in homogenously. The burgers were frozen after preparation and thawed right before organoleptic trials. For the organoleptic trials the burgers were pan-fried in a little amount of sunflower oil.

### Results

All versions with frozen particles were much more succulent than the homogenously blended versions or the reference. From these trials the oyster mushroom version with the methyl cellulose mix was the most succulent.

## Claims

1. A fat product, suitable for substituting animal fat, wherein the product comprises:
a) an amount of one or more vegetable fibrous material;
b) an amount of vegetable fat or oil;
c) water;
d) one or more additional binding materials;
wherein the fat product is a coherent gel at room temperature and substantially white.

2. The product according to claim 1, wherein the one or more vegetable fibrous material is selected from edible fungi materials

3. The product according to claim 2, wherein the edible fungi material is selected from the genus *Pleurotus or Agaricus*, preferably from fungi of the species *Pleurotus Ostreatus.*

4. The product of any of claims 2-3, wherein the fungi material is a blanched fungi material, preferably blanched for at least 5 minutes in water at a temperature of between 80°C to 100°C.

5. The product of any preceding claim, wherein the product comprises 20-60 wt% vegetable fibrous material, 5% to 35% of oil, 20% to 60% of added water, and 0-20 wt% of additional binding materials.

6. The product of any preceding claims, wherein the additional binder comprises a polysaccharide, substituted polysaccharide or protein binding material.

7. The product of any preceding claim, wherein the oil is a vegan oil, preferably sunflower oil, canola oil or coconut oil.

8. The product of any preceding claim, wherein the fat product is in particulate form of a size of larger than 1 mm frozen and packaged.

9. A meat product comprising meat or a vegan meat replacement product further comprising 1-50 wt% of fat product according to any one of the preceding claims, preferably 4-40 wt%.

10. Use of a fat product according to any of claims 1 to 8, in a food product, wherein the fat product is used in an amount between 1-50 wt% and is separately visible in the food product.

11. Use of the fat product of claim 10, wherein the food product is a vegetarian or vegan meat substitute.
